# EUROPÄISCHE PATENTANMELDUNG

(11) **EP 2 733 438 A1**
(43) Veröffentlichungstag der Anmeldung: **21.05.2014**
(21) Anmeldenummer: 13192851.7
(22) Anmeldetag: 14.11.2013
(51) Int. Cl.: F24J 2/32, F28F 13/00, F28D 15/02, F24J 2/46

(54) **Solarkollektor**

(30) Priorität: 19.11.2012 DE 102012111081
(71) Anmelder: Viessmann Werke GmbH & Co. KG, 35108 Allendorf (DE)
(72) Erfinder: Lehmensiek, Udo, 35108 Allendorf (DE); Engelhard, Mario, 04425 Taucha (DE); Wenzler, Sigurd, 35066 Frankenberg (DE); Hafner, Bernd, 35108 Allendorf (DE)
(74) Vertreter: Wolf, Michael

(57) **Zusammenfassung**

Die Erfindung betrifft einen Solarkollektor, umfassend mindestens ein Wärmerohr (1) mit einem Kondensator (2), der zur Wärmeabgabe mit einer Sammelleitung (3) verbunden ausgebildet ist, wobei zwischen dem Kondensator (2) und der Sammelleitung (3) ein Wärmeleitmaterial (4) angeordnet ist. Nach der Erfindung ist vorgesehen, dass das Wärmeleitmaterial (4) als Folie ausgebildet ist.

## Beschreibung

Die Erfindung betrifft einen Solarkollektor gemäß dem Oberbegriff des Patentanspruchs 1.

Ein Solarkollektor der eingangs genannten Art ist nach der DE 94 00 961 U1 bekannt. Dieser besteht aus mindestens einem Wärmerohr (auch Heat-Pipe genannt) mit einem Kondensator, der zur Wärmeabgabe mit einer Sammelleitung verbunden ausgebildet ist, wobei zwischen dem Kondensator und der Sammelleitung ein Wärmeleitmaterial angeordnet ist. Das wärmeleitmaterial besteht in diesem Fall aus einer wärmeleitfähigen Paste bzw. einer wärmetransferpaste.

Der Erfindung liegt die Aufgabe zugrunde, einen Solarkollektor der eingangs genannten Art zu verbessern, und zwar insbesondere hinsichtlich einer vereinfachten Montage.

Diese Aufgabe ist mit einem Solarkollektor der eingangs genannten Art durch die im Kennzeichen des Patentanspruchs 1 aufgeführten Merkmale gelöst.

Nach der Erfindung ist also vorgesehen, dass das Wärmeleitmaterial als Folie, insbesondere als Graphitfolie, ausgebildet ist.

Mit anderen Worten zeichnet sich die Erfindung dadurch aus, dass statt einer vergleichsweise mühsam von Hand aufzutragenden Paste eine einfach einzulegende Folie verwendet wird. Diese Maßgabe erleichtert die Montage des Solarkollektor erheblich. Darüber hinaus hat sich gezeigt, dass Wärmeleitpaste auf Dauer und entsprechender Temperaturbelastung spröde wird, was bei einer Folie, wie Versuche gezeigt haben, nicht der Fall ist.

Andere vorteilhafte Weiterbildungen des erfindungsgemäßen Solarkollektors ergeben sich aus den abhängigen Patentansprüchen.

Der Vollständigkeit halber wird noch auf folgenden Stand der Technik hingewiesen:

Aus der EP 0 717 244 B1 (siehe insbesondere Figur 4) ist ein Solarkollektor der Anmelderin bekannt, bei dem die erfindungsgemäße Folie in Zunkuft eingesetzt werden soll. Ein solcher Solarkollektor ist beim nachfolgenden Ausführungsbeispiel näher erläutert.

Aus der DE 10 2006 010 578 B3 ist ein Solarkollektor bekannt, bei dem der Absorber aus einer Graphitfolie gebildet ist.

Der erfindungsgemäße Solarkollektor einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

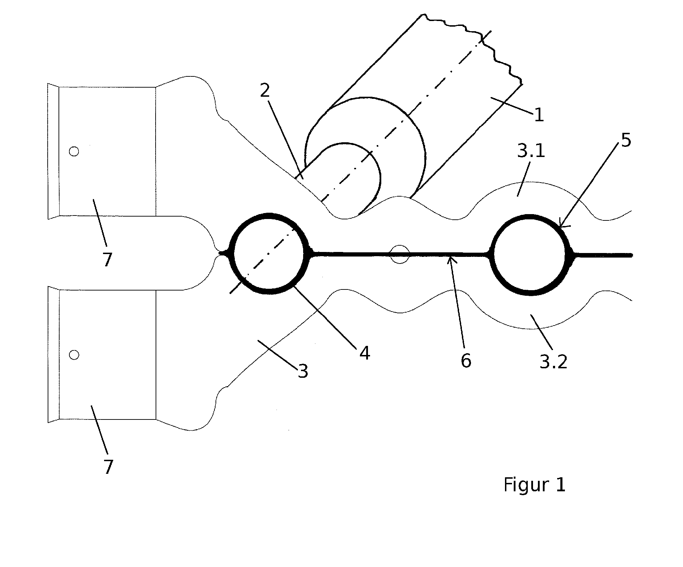

Es zeigt schematisch
- Figur 1: teilweise von der Seite (die Sammelleitung), teil-weise perspektivisch (das Wärmerohr mit seinem Kon-densator) den erfindungsgemäßen Solarkollektor, allerdings der Einfachheit halber nur mit einem Wärmerohr.

In der einzigen Figur 1 ist ein Solarkollektor dargestellt, der aus mindestens einem Wärmerohr 1 mit einem Kondensator 2 (siehe hierzu zum Beispiel auch http://de.wikipedia.org/w/index.php?title=W%C3%A4rmerohr&oldid=108447795) besteht und der zur Wärmeabgabe mit einer Sammelleitung 3 verbunden ausgebildet ist, wobei zwischen dem Kondensator 2 und der Sammelleitung 3 ein Wärmeleitmaterial 4 angeordnet ist.

Wie aus der vorgenannten EP 0 717 244 B1 bekannt, umfasst die Sammelleitung 3 zwei Teilstränge 3.1, 3.2. Diese weisen an den Kondensator 2 angepasst ausgebildete Aufnahmebereiche 5 auf, wobei der Kondensator 2 besonders bevorzugt zylinderförmig und der Aufnahmebereiche 5 entsprechend halbzylindrisch ausgebildet ist.

Weiterhin ist in bekannter Weise vorgesehen, dass jeder Teilstrang 3.1, 3.2 einen Solarkreisanschluss 7 aufweist und dass die Teilstränge 3.1, 3.2 jeweils an ihrem dem Solarkreisanschluss 7 abgewandten Ende miteinander verbunden ausgebildet sind.

Wesentlich für den erfindungsgemäßen Solarkollektor ist nun, dass das Wärmeleitmaterial 4 als Folie ausgebildet ist.

Diese Maßgabe ist dabei dann besonders vorteilhaft, wenn die Sammelleitung 3 nicht aus Kupfer, sondern, wie bei der erfindungsgemäßen Lösung bevorzugt vorgesehen, aus Stahl gebildet ist, da die Wärmeleitfähigkeit von Stahl schlechter als die von Kupfer ist, Kupfer aber regelmäßig einen höheren Einkaufspreis hat.

Weiterhin ist bevorzugt vorgesehen, dass die Folie als Graphitfolie ausgebildet ist und eine Dicke von weniger als 1 mm, vorzugsweise weniger als 0,4 mm, aufweist. Derartige Graphitfolie wird beispielsweise von der Firma SGL Carbon SE, Wiesbaden, Bundesrepublik Deutschland, unter dem Markennamen SIG-RAFLEX®-Folie hergestellt und angeboten.

Ferner ist vorgesehen, dass die zwischen dem Kondensator 2 und der Sammelleitung 3 angeordnete Folie einen bis zu einem kondensatorfreien Bereich der Sammelleitung 3 reichenden und an der Sammelleitung 3 anliegenden Zusatzabschnitt aufweist. Über diesen Zusatzabschnitt wird vom Kondensator 2 kommende Wärme vorteilhaft auch in einen Bereich der Folie entfernt vom Kondensator 2 geleitet, um dann dort an die Sammelleitung 3 übertragen zu werden.

Wie aus der Figur 1 ersichtlich, ist der Kondensator 2 besonders bevorzugt, aber nicht zwingend, vollständig von der Folie umschlossen ausgebildet.

Weiterhin ist vorgesehen, dass die Folie zusätzlich zwischen den Teilsträngen 3.1, 3.2 angeordnet ist, wobei die Teilstränge 3.1, 3.2 zueinander orientierte, ebenflächig ausgebildete Kontaktbereiche 6 aufweisen und wobei schließlich die Folie zwischen den Kontaktbereichen 6 angeordnet ist. Auch in diesem Fall wird, sofern die Folie am Kondensator 2 mit der Folie zwischen den Teilsträngen 3.1, 3.2 verbunden bzw. einstückig ausgebildet ist, vom Kondensator 2 kommende Wärme in einen Bereich der Folie entfernt vom Kondensator 2 geleitet, um dann dort an die beiden Teilstränge 3.1, 3.2 übertragen zu werden.

### Bezugszeichenliste

- 1: Wärmerohr
- 2: Kondensator
- 3: Sammelleitung
- 3.1: Teilstrang
- 3.2: Teilstrang
- 4: Wärmeleitmaterial
- 5: Aufnahmebereich
- 6: Kontaktbereich
- 7: Solarkreisanschluss

## Patentansprüche

1. Solarkollektor, umfassend mindestens ein Wärmerohr (1) mit einem Kondensator (2), der zur Wärmeabgabe mit einer Sammelleitung (3) verbunden ausgebildet ist, wobei zwischen dem Kondensator (2) und der Sammelleitung (3) ein Wärmeleitmaterial (4) angeordnet ist,
**dadurch gekennzeichnet,**
**dass** das Wärmeleitmaterial (4) als Folie ausgebildet ist.

2. Solarkollektor nach Anspruch 1,
**dadurch gekennzeichnet,**
**dass** die Folie als Graphitfolie ausgebildet ist.

3. Solarkollektor nach Anspruch 1 oder 2,
**dadurch gekennzeichnet,**
**dass** die zwischen dem Kondensator (2) und der Sammelleitung (3) angeordnete Folie einen bis zu einem kondensatorfreien Bereich der Sammelleitung (3) reichenden Zusatzabschnitt aufweist.

4. Solarkollektor nach einem der Ansprüche 1 bis 3,
**dadurch gekennzeichnet,**
**dass** der Kondensator (2) vollständig von der Folie umschlossen ausgebildet ist.

5. Solarkollektor nach einem der Ansprüche 1 bis 4,
**dadurch gekennzeichnet,**
**dass** die Sammelleitung (3) aus Stahl gebildet ist.

6. Solarkollektor nach einem der Ansprüche 1 bis 5,
**dadurch gekennzeichnet,**
**dass** die Sammelleitung (3) zwei Teilstränge (3.1, 3.2) umfasst.

7. Solarkollektor nach Anspruch 6,
**dadurch gekennzeichnet,**
**dass** die Folie zusätzlich zwischen den Teilsträngen (3.1, 3.2) angeordnet ist.

8. Solarkollektor nach Anspruch 6 oder 7,
**dadurch gekennzeichnet,**
**dass** die Teilstränge (3.1, 3.2) an den Kondensator (2) angepasst ausgebildete Aufnahmebereiche (5) aufweisen.

9. Solarkollektor nach einem der Ansprüche 6 bis 8,
**dadurch gekennzeichnet,**
**dass** die Teilstränge (3.1, 3.2) zueinander orientierte, ebenflächig ausgebildete Kontaktbereiche (6) aufweisen.

10. Solarkollektor nach Anspruch 9,
**dadurch gekennzeichnet,**
**dass** die Folie zwischen den Kontaktbereichen (6) angeordnet ist.
